Europäisches Patentamt

European Patent Office

Office européen des brevets

(19)

(11) Publication number: **0 042 201 B1**

## (12) EUROPEAN PATENT SPECIFICATION

(45) Date of publication of patent specification: **10.04.85**

(21) Application number: **81300468.6**

(22) Date of filing: **04.02.81**

(51) Int. Cl.⁴: **G 01 B 13/08,** G 11 B 27/11, B 65 H 23/00

(54) A radius sensor and a method of determining the outer radius of a roll of a flexible tape wound on a reel.

(30) Priority: **27.05.80 US 153248**

(43) Date of publication of application:
**23.12.81 Bulletin 81/51**

(45) Publication of the grant of the patent:
**10.04.85 Bulletin 85/15**

(84) Designated Contracting States:
**DE FR GB**

(56) References cited:
**US-A-2 985 399**

**IBM TECHNICAL DISCLOSURE BULLETIN, vol. 4, nr. 6, November 1961, NEW YORK (US), R.C. DURBECK et al.: "Air bearing", page 5**

(73) Proprietor: **Computer Peripherals Inc.
8100 34th Avenue South
Minneapolis Minnesota (US)**

(72) Inventor: **Platter, Sanford
Sugarloaf Star Route
Boulder Colorado 80302 (US)**

(74) Representative: **Caro, William Egerton et al
J. MILLER & CO. Lincoln House 296-302 High Holborn
London WC1V 7JH (GB)**

Courier Press, Leamington Spa, England.

## Description

This invention relates to radius sensors for determining the outer radius of a roll of a flexible tape wound on a reel of, for example, a flexible tape transport. The invention also relates to methods of determining the outer radius of a roll of a flexible tape wound on a reel. U.S.—A—2 985 399 relates to a surface position indicator of the non-contacting type where a fail-safe device prevents engagement of the indicator with the surface being measured upon failure of a power supply. Thus damage to indicator and the surface being measured is prevented.

In the case of a reel-to-reel tape transport, if the radius of the tape on the take-up or supply reel is known, and the rotational velocity of the reel is known, the tape velocity may be determined without the need of a tachometer to monitor the tape velocity. More importantly, by knowing the amount of tape on the reel at any given time, the rotational velocity of the reel may be controlled thereby to control tape velocity past read and write heads as well as to control tape velocity during high-speed rewind.

According to one aspect of the present invention there is provided a radius sensor for determining the outer radius of a roll of a flexible tape wound on a reel characterised by a bearing arranged adjacent to said reel and having an arcuate peripheral surface about which, in operation, a portion of the tape is wrapped; fluid supply means for supplying fluid to a region between said tape and the peripheral surface of the bearing, said fluid in said region being at a pressure so as to form a fluid support for said tape; a plurality of orifices in fluid communication between a fluid chamber and said peripheral surface of the bearing, the orifices being arranged in a pattern extending along the peripheral surface of the bearing between maximum and minimum locations of the last or first point of support of said tape by said fluid support when travelling respectively to or from said reel, for which locations the length of the fluid support is a maximum and a minimum, respectively, said orifices being so disposed and arranged (a) as to admit fluid into said fluid chamber through those orifices which are in communication with said region and to expel fluid from said fluid chamber through those orifices which are not in communication with said region when said last or first point of support is between said maximum and minimum locations, and (b) as to provide a fluid pressure within said fluid chamber which fluid pressure varies substantially linearly between a minimum pressure and a maximum pressure as said last or first point of support varies between its minimum and maximum locations; and pressure sensing means within said fluid chamber for sensing the fluid pressure within said fluid chamber, so that the outer radius of said roll of a flexible tape wound on said reel can be determined from the fluid pressure in said fluid chamber from the relationship

$$Rr=X \cos (KP)+Y \sin (KP)-Rb$$

where Rr is the radius to be determined, X and Y are the horizontal and vertical components respectively of the distance between the axis of the said reel and the axis of said bearing, Rb is the radius of the arcuate peripheral surface of the bearing, P is the pressure within said fluid chamber and K is a constant.

According to another aspect of the present invention there is provided a method of determining the outer radius of a roll of a flexible tape wound on a reel characterised by wrapping a portion of said tape about the arcuate peripheral surface of a bearing positioned adjacent said reel; providing a source of fluid under pressure to support said tape about the peripheral surface of the bearing; providing, within said bearing, a fluid chamber and a plurality of orifices in fluid communication between said fluid chamber and the peripheral surface of said bearing, the pattern of said orifices extending along said peripheral surface of the bearing between maximum and minimum locations of the last or first point of support of said tape by the fluid support when travelling respectively to or from said reel, for which locations the length of the fluid support is a maximum and a minimum, respectively, said orifices being arranged to admit fluid into said fluid chamber through those orifices which are in communication with that part of the peripheral surface of said bearing supporting said tape and to expel fluid from said fluid chamber through those orifices which are not in communication with that part of the peripheral surface of said bearing supporting said tape when said last or first point of support is between said maximum and minimum locations; arranging said orifices so that the fluid pressure within said fluid chamber varies substantially linearly between a minimum pressure and a maximum pressure as said last or first point of support varies between said minimum and maximum locations; measuring the pressure within said fluid chamber; and determining the outer radius of the roll of tape wound on said reel from the relationship;

$$Rr=X \cos (KP)+Y \sin (KP)-Rb$$

where Rr is the radius to be determined, X and Y are the horizontal and vertical components respectively of the distance between the axis of said reel and the axis of said bearing, Rb is the radius of the arcuate peripheral surface of said bearing, P is the pressure within said fluid chamber and K is a constant.

The invention is illustrated, merely by way of example, in the accompanying drawings, in which:

Figure 1 is a schematic diagram illustrating the relationship between a radius sensor according to the present invention and an adjacent take-up or supply reel;

Figure 2 is an enlarged sectional view of a portion of the radius sensor of Figure 1; and

Figure 3 is an enlarged sectional view of a portion of a modified radius sensor according to the present invention.

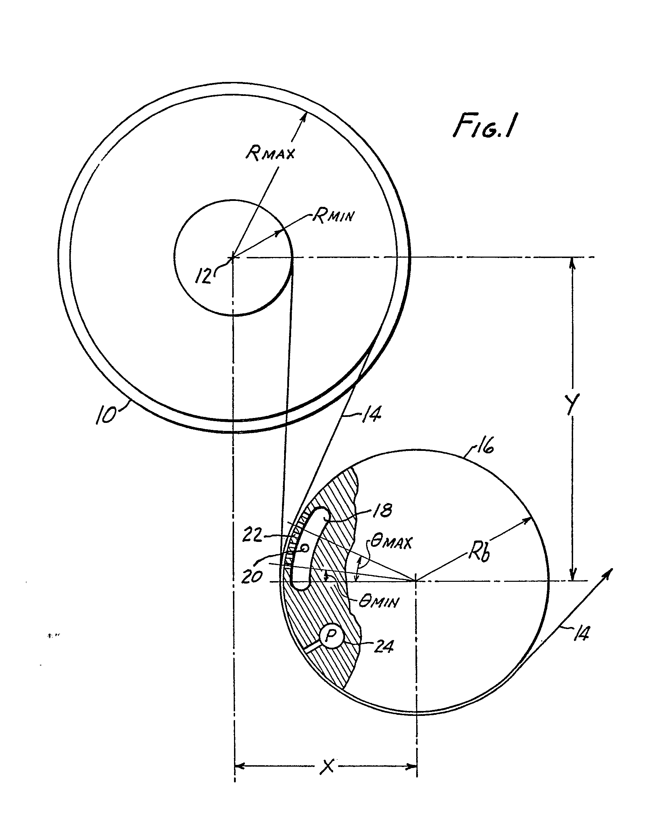

Referring to the drawings, and particularly to Figure 1, there is illustrated a radius sensor according to the present invention. A reel 10 is arranged on a shaft (not shown) to rotate about an axis 12 to receive a supply magnetic tape 14. A fluid bearing 16, which in this embodiment is an air bearing, is arranged adjacent to the reel 10 so that the tape 14 is wrapped partially around the peripheral surface of the bearing 16. The reel 10 is capable of holding a supply of tape 14 wrapped therearound such that the outer radius of the tape wrapped on the reel may vary between a maximum radius, Rmax, and a minimum radius, Rmin. In a case of a supply reel, the radius of the tape will ordinarily vary from Rmax to Rmin and in the case of a take-up reel, the radius of the tape of the reel will vary from Rmin to Rmax.

As the radius of the tape on the reel 10 varies between Rmax and Rmin, the wrap angle on the bearing 16 varies between $\theta$ max and $\theta$ min. It is in the region of the changing wrap angle that the radius sensor is disposed.

As shown in Figure 1, a supply 24 of fluid, such as air, under pressure, provides fluid to support the tape 14 from the peripheral surface of the bearing 16. A plenum chamber 18 contains a pressure sensitive transducer 20, such as, for example, a doped silicon diaphragm sensor, a piezo-electric pressure sensor or a photo-optic bellows pressure sensor. A plurality of metering orifices 22 are in fluid communication between the plenum chamber 18 and the surface of the bearing 16 in the region between $\theta$ min. and $\theta$ max. It can be shown that the outer radius Rr of the tape 14 on the reel 10 is related to the wrap angle by the following relationship:

$$Rr = X \cos \theta + Y \sin \theta - Rb \qquad (1)$$

where X and Y are the horizontal and vertical components respectively of the distance between the axis of the reel 10 and the axis of the bearing 16. Rb is the radius of the bearing 16, and $\theta$ is the wrap angle of the tape leaving or entering the bearing. Therefore, since X, Y and Rb are known, if $\theta$ can be determined, the radius Rr of tape on the reel 10 at any given instant can be ascertained.

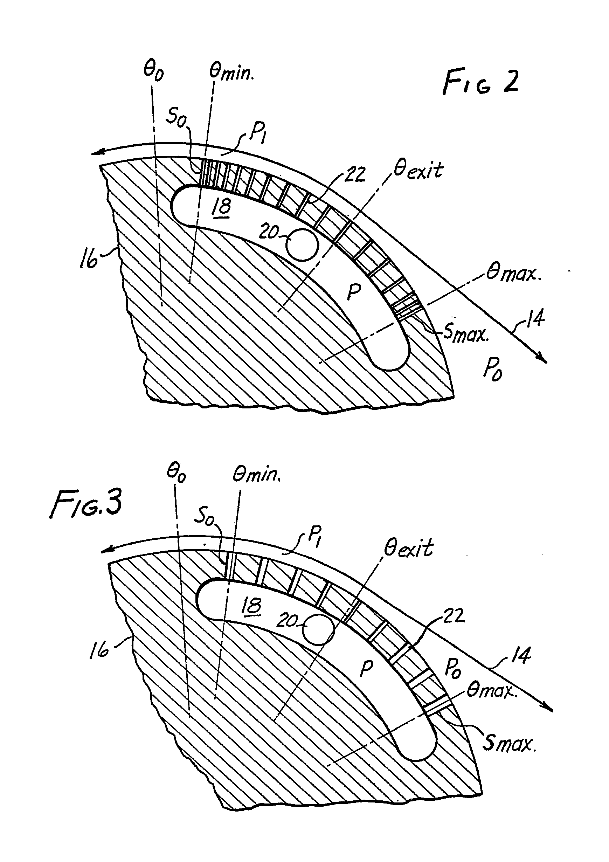

Referring to Figure 2, a pressure $P_1$ occurs in the space between the tape 14 and the peripheral surface of the bearing. Consequently, fluid will pass through the metering orifices 22 into the plenum chamber 18. At the same time, fluid will escape from the plenum chamber 18 to other orifices 22 to the region of atmospheric pressure $P_0$. Consequently, the pressure P within the plenum chamber 18 is a function of the pressure $P_1$, the number of orifices open to the atmosphere, and the number of orifices open to the pressure $P_1$. It can be shown that the pressure within the plenum chamber 18 is:

$$P = \frac{P_1}{1 + N^2} \qquad (2)$$

where

$$N = \frac{No}{Nc} \qquad (3)$$

where No is the number of orifices open to the atmosphere and Nc is the number of orifices open to the pressure $P_1$. To maintain a linear relationship between the pressure P within the plenum chamber 18 and the wrap angle $\theta$, for a given orifice size, the orifices must be spaced in accordance with the following relationships:

$$Sn = \frac{Smax}{2} \left(\frac{n}{N/2}\right)^2 \text{ for } Sn \leqslant \frac{Smax}{2} \qquad (4)$$

and

$$Sn = Smax - \frac{Smax}{2} \left(\frac{N-n}{N/2}\right)^2 \text{ for } Sn \geqslant \frac{Smax}{2} \qquad (5)$$

where, Sn is the distance between an orifice $S_0$ (at $\theta$ min) and the respective orifice, n is the number of orifices between the orifice $S_0$ and the orifice at the distance Sn from the orifice $S_0$ plus 1, N is one less than the total number of orifices, and Smax is the total distance between $\theta$ min and $\theta$ max. From the foregoing it can be shown that:

$$Smax = Rb (\theta \text{ max} - \theta \text{ min}) \qquad (6)$$

where $\theta$ is measured in radians.

It can be shown that with the spacing of orifices as given by equations (4) and (5), the wrap angle $\theta$ is directly proportional to the pressure P within the plenum chamber 18. Thus

$$\theta = KP \qquad (7)$$

where K is a constant dependent upon orifice radius. Since Smax is a function of $\theta$, which in turn is a function of K, the relationship set forth in equations (4) and (5) provide a linear relationship between pressure P and wrap angle $\theta$ as long as the orifices all are of uniform radius.

It will be appreciated from equations (4) and (5) that the pattern of orifices is such that the orifices closest to $S_0$ and Smax are spaced closest together, with the pattern symmetrical about the centre wrap angle (i.e. distance Smax/2).

Instead of spacing the orifices in accordance with equations (4) and (5), the orifices may be equally spaced, as shown in Figure 3, with the orifices increasing in size towards the orifice $S_0$ and towards the orifice Smax. To maintain an essentially linear relationship between pressure P within the plenum chamber 18 and the wrap angle, for a given orifice spacing, the radius of the orifices must be dimensioned in accordance with the following relationships:

$$Rn = rmin \left(\frac{N-n}{N/2}\right)^4 \quad \text{for } Sn \leqslant Smax/2 \tag{8}$$

and

$$Rn = rmin \left(\frac{n}{N/2}\right)^4 \quad \text{for } Sn \geqslant Smax/2 \tag{9}$$

where, Rn is the radius of the respective orifice, rmin is the radius of the smallest orifice (at Smax/2) and Sn, n, N and Smax are defined as above.

It will be appreciated that either with the pattern of orifices determined by either equations (4) and (5) or with the radius of orifices determined by equations (8) and (9), the wrap angle $\theta$ varies in a linear fashion with pressure P, as expressed in equation (7). Hence, equation (1) may be written as:

$$Rr = X \cos (KP) + Y \sin (KP) - Rb \tag{10}$$

Therefore, by measuring the pressure P within the plenum chamber 18, the radius of tape on the reel 10 may be ascertained, for example, by means of a microprocessor or look-up table.

In one case where orifice diameter was 0.25 mm, an orifice pattern was developed from equations (4) and (5) to detect the radius of tape on a reel for a change in wrap angle of 0.65 radians on a 2.5 cm radius fluid bearing. Air flow through the radius sensor was 2 litres/minute from an air bearing supporting 1.27 cm computer tape. The radius of the tape on the reel was measured to an accuracy of ±2%.

The radius sensor described above in relation to the drawings is simple, effective for detecting the outer radius of tape on a reel, and may be manufactured at relatively low cost.

**Claims**

1. A radius sensor for determining the outer radius of a roll of a flexible tape (14) wound on a reel (10) characterised by a bearing (16) arranged adjacent to said reel (10) and having an arcuate peripheral surface about which, in operation, a portion of the tape (14) is wrapped; fluid supply means (24) for supplying fluid to a region between said tape (14) and the peripheral surface of the bearing (16), said fluid in said region being at a pressure so as to form a fluid support for said tape (14); a plurality of orifices (22) in fluid communication between a fluid chamber (18) and said peripheral surface of the bearing (16), the orifices (22) being arranged in a pattern extending along the peripheral surface of the bearing (16) between maximum and minimum locations of the last or first point of support of said tape (14) by said fluid support when travelling respectively to or from said reel (10), for which locations the length of the fluid support is a maximum and a minimum, respectively, said orifices (22) being so disposed and arranged (a) as to admit fluid into said fluid chamber (18) through those orifices which are in communication with said region and to expel fluid from said fluid chamber (18) through those orifices which are not in communication with said region when said last or first point of support is between said maximum and minimum locations, and (b) as to provide a fluid pressure within said fluid chamber (18) which fluid pressure varies substantially linearly between a minimum pressure and a maximum pressure as said last or first point of support varies between its minimum and maximum locations; and pressure sensing means (20) within said fluid chamber (18) for sensing the fluid pressure within said fluid chamber (18), so that the outer radius of said roll of a flexible tape (14) wound on said reel (10) can be determined from the fluid pressure in said fluid chamber (18) from the relationship

$$Rr = X \cos (KP) + Y \sin (KP) - Rb$$

where Rr is the radius to be determined, X and Y are the horizontal and vertical components respectively of the distance between the axis of the said reel (10) and the axis of said bearing (16), Rb is the radius of the arcuate peripheral surface of the bearing (16), P is the pressure within said fluid chamber (18) and K is a constant.

2. A radius sensor as claimed in Claim 1 characterised in that said orifices are of equal size and arranged in a pattern determined by the relationship:

$$Sn = \frac{Smax}{2} \left(\frac{n}{N/2}\right)^2$$

for $Sn \leqslant Smax/2$, and

$$Sn = Smax - \frac{Smax}{2} \left(\frac{N-n}{N/2}\right)^2$$

for $Sn \geqslant Smax/2$,

where Sn is the distance along said peripheral surface between the orifice at the minimum location and the respective orifice, Smax is the distance between said minimum and maximum locations, n is the number of orifices between the orifice at the minimum location and the orifice at the distance Sn from the minimum location plus 1, and N is the total number of orifices less 1.

3. A radius sensor as claimed in Claim 1 characterised in that said orifices are arranged with equal spacing between said minimum and maximum locations and have radii determined by the relationships:

$$Rn = rmin \left(\frac{N-n}{N/2}\right)^4$$

for $Sn \leqslant Smax/2$, and

$$Rn=rmin\left(\frac{n}{N/2}\right)^4$$

for $Sn \geqslant Smax/2$

where Sn is the distance along said peripheral surface between the orifice at the minimum location and the respective orifice, Smax is the distance between said minimum and maximum locations, Rn is the radius of an orifice at a location which is a distance Sn from the minimum locations, rmin is the radius of an orifice at Smax/2, n is the number of orifices between the orifice at the minimum location and the orifice at the location which is a distance Sn from the minimum location plus 1, and N is the total number of orifices less 1.

4. A method of determining the outer radius of a roll of a flexible tape (14) wound on a reel (10) characterised by wrapping a portion of said tape (14) about the arcuate peripheral surface of a bearing (16) positioned adjacent said reel (10); providing a source of fluid (24) under pressure to support said tape (14) about the peripheral surface of the bearing (16); providing, within said bearing (16), a fluid chamber (18) and a plurality of orifices (22) in fluid communication between said fluid chamber (18) and the peripheral surface of said bearing (16), the pattern of said orifices (22) extending along said peripheral surface of the bearing (16) between maximum and minimum locations of the last or first point of support of said tape (14) by the fluid support when travelling respectively to or from said reel (10), for which locations the length of the fluid support is a maximum and a minimum, respectively, said orifices (22) being arranged to admit fluid into said fluid chamber through those orifices which are in communication with that part of the peripheral surface of said bearing (16) supporting said tape (14) and to expel fluid from said fluid chamber (18) through those orifices which are not in communication with that part of the peripheral surface of said bearing (16) supporting said tape (14) when said last or first point of support is between said maximum and minimum locations; arranging said orifices (22) so that the fluid pressure within said fluid chamber (18) varies substantially linearly between a minimum pressure and a maximum pressure as said last or first point of support varies between said minimum and maximum locations; measuring the pressure within said fluid chamber (18); and determining the outer radius of the roll of tape wound on said reel (10) from the relationship:

$$Rr=X \cos (KP)+Y \sin (KP)-Rb$$

where Rr is the radius to be determined, X and Y are the horizontal and vertical components respectively of the distance between the axis of said reel (10) and the axis of said bearing (16), Rb is the radius of the arcuate peripheral surface of said bearing (16), P is the pressure within said fluid chamber (18) and K is a constant.

5. A method as claimed in Claim 4 characterised in that said orifices are of equal size and are arranged in a pattern determined by the relationship:

$$Sn= \frac{Smax}{2} \left(\frac{n}{N/2}\right)^2$$

for $Sn \leqslant Smax/2$, and

$$Sn=Smax- \frac{Smax}{2} \left(\frac{N-n}{N/2}\right)^2$$

for $Sn \geqslant Smax/2$

where Sn is the distance along said peripheral surface between the orifice at the minimum location and the respective orifice, Smax is the distance between said minimum and maximum locations, n is the number of orifices between the orifice at the minimum location and the orifice at the distance Sn from the minimum location plus 1, and N is the total number of orifices less 1.

6. A method as claimed in Claim 4 characterised in that said orifices are arranged with equal spacing between said minimum and maximum locations and have radii determined by the relationships:

$$Rn=rmin\left(\frac{N-n}{N/2}\right)^4$$

for $Sn \leqslant Smax/2$, and

$$Rn=rmin\left(\frac{n}{N/2}\right)^4$$

for $Sn \geqslant Smax/2$

where Sn is the distance along said peripheral surface between the orifice at the minimum location and the respective orifice, Smax is the distance between said minimum and maximum locations, Rn is the radius of an orifice at a location which is a distance Sn from the minimum location, rmin is the radius of an orifice at Smax/2, n is the number of orifices between the orifice at the minimum location and the orifice at the location which is a distance Sn from the minimum location plus 1, and N is the total number of orifices less 1.

**Revendications**

1. Capteur de rayon destiné à déterminer le rayon extérieur d'une galette d'une bande flexible (14) enroulée sur une bobine (10) caractérisé en ce qu'il comporte un dispositif d'appui (16) disposé près de ladite bobine (10) et comprenant une surface périphérique en arc de cercle autour de laquelle, en fonctionnement, une partie de la bande (14) est enroulée; un dispositif de fourniture de fluid (24) qui fournit un fluide à une région entre ladite bande (14) et la surface périphérique du dispositif d'appui (16), ledit fluide dans ladite région étant à une pression telle qu'il forme un support fluidique pour ladite bande (14); plusieurs orifices (22) en communication fluidique entre une chambre à fluide (18) et ladite surface périphérique du dispositif d'appui (16), les orifices (22) étant disposés dans une configuration s'étendant le long de la surface périphérique du dispositif d'appui (16) entre une position maximale et une position minimale du dernier ou du premier point de support de ladite bande (14) par ledit support fluidique en se déplaçant respectivement vers et depuis ladite bobine (10), positions pour lesquelles la longueur du support fluidique est respectivement maximale et minimale, lesdits orifices (22) étant disposés et agencés (a) de manière à admettre un fluide dans ladite chambre à fluide (18) par les orifices qui sont en communication avec ladite région et à éjecter du fluide de ladite chambre à fluide (18) par les orifices qui ne sont pas en communication avec lesdites régions quand ledit dernier ou ledit premier point de support se trouve entre ladite position maximale et ladite position minimale, et (b) de manière à produire une pression fluidique dans ladite chambre à fluide (18), cette pression fluidique variant de façon pratiquement linéaire entre une pression minimale et une pression maximale quand ledit dernier ou ledit premier point de support varie entre sa position minimale et sa position maximale; et un dispositif de détection de pression (20) dans ladite chambre à fluide (18) pour détecter la pression fluidique dans ladite chambre à fluide (18) de manière que le rayon extérieur de ladite galette de bande flexible (14) enroulée autour de ladite bobine (10) puisse être déterminé à partir de la pression fluidique dans ladite chambre à fluide (18), par la relation

$$Rr=X\cos(KP)+Y\sin(KP)-Rb$$

où Rr est le rayon à déterminer, X et Y sont respectivement la composante horizontale et la composante verticale de la distance entre l'axe de ladite bobine (10) et l'axe dudit dispositif d'appui (16), Rb est le rayon de la surface périphérique en arc de cercle du dispositif d'appui (16), P est la pression dans ladite chambre à fluide (18) et K est une constante.

2. Capteur de rayon selon la revendication 1, caractérisé en ce que lesdits orifices ont des dimensions égales et sont agencés dans une disposition déterminée par la relation:

$$Sn=\frac{Smax}{2}\left(\frac{n}{N/2}\right)^2$$

pour Sn<Smax/2, et

$$Sn=Smax-\frac{Smax}{2}\left(\frac{N-n}{N/2}\right)^2$$

pour Sn>Smax/2

où Sn est la distance suivant ladite surface périphérique entre l'orifice à la position minimale et l'orifice respectif, Smax est la distance entre ladite position minimale et ladite position maximale, n est le nombre des orifices entre l'orifice à la position minimale et l'orifice à la distance Sn de la position minimale plus 1 et N est le nombre total des orifices moins 1.

3. Capteur de rayon selon la revendication 1, caractérisé en ce que lesdits orifices sont disposés à un écartement égal entre ladite position minimale et ladite position maximale, et ont des rayons déterminés par les relations:

$$Rn=rmin\left(\frac{N-n}{N/2}\right)^4$$

pour
Sn<Smax/2, et

$$Rn=rmin\left(\frac{n}{N/2}\right)^4$$

pour Sn>Smax/2
où Sn est la distance suivant ladite surface périphérique entre l'orifice à la position minimale et l'orifice respectif, Smax est la distance entre ladite position minimale et ladite position maximale, Rn est le rayon d'un orifice dans une position qui est à une distance Sn de la position minimale, Rmin est le rayon d'un orifice à Smax/2, n est le nombre des orifices entre l'orifice à la position minimale et l'orifice à la position qui est à une distance Sn de la position minimale +1 et N est le nombre total d'orifices moins 1.

4. Procédé de détermination du rayon extérieur d'une galette d'une bande flexible (14) enroulé sur une bobine (10), caractérisé en ce qu'il consiste à enrouler une partie de ladite bande (14) autour de la surface périphérique en arc de cercle d'un dispositif d'appui (16) positionné près de ladite bobine (10) à prévoir une source de fluide (24) sous pression pour supporter ladite bande (14) autour de la surface périphérique du dispositif d'appui (16); à prévoir dans ledit dispositif d'appui (16), une chambre à fluide (18) et plusieurs orifices (22) en communication fluidique entre ladite chambre à fluide (18) et la surface périphérique dudit dispositif d'appui (16), la configuration desdits orifices (22) s'étendant suivant ladite surface périphérique du dispositif d'appui (16) entre une position maximale et une position minimale du dernier ou du premier point de support de ladite bande (14) par le support fluidique, en se déplaçant respectivement vers et depuis ladite bobine (10), positions pour lesquelles la longueur du support fluidique est respectivement maximale et minimale, lesdits orifices (22) étant agencés pour admettre un fluide dans ladite chambre à fluide par les orifices qui sont en communication avec la partie de la surface périphérique dudit dispositif d'appui (16) supportant ladite bande (14) et pour éjecter du fluide de ladite chambre à fluide (18) par les orifices qui ne sont pas en communication avec la partie de la surface périphérique dudit dispositif d'appui (16) supportant ladite bande (14) lorsque ledit dernier ou ledit premier point de support se trouve entre ladite position maximale et ladite position minimale; à disposer lesdits orifices (22) de manière que la pression fluidique dans ladite chambre à fluide (18) varie de façon pratiquement linéaire entre une pression minimale et une pression maximale quand ledit dernier ou ledit premier point de support varie entre ladite position minimale et ladite position maximale; à mesurer la pression dans ladite chambre à fluide (18), et à déterminer le rayon extérieur de la galette de bande enroulée sur ladite bobine (10) à partir de la relation:

$$Rr = X \cos (KP) + Y \sin (KP) - Rb$$

où Rr est le rayon à déterminer, X et Y sont respectivement la composante horizontale et la composante verticale de la distance entre l'axe de ladite bobine (10) et l'axe dudit dispositif d'appui (16), Rb est le rayon de la surface périphérique en arc de cercle dudit dispositif d'appui (16), P est la pression dans ladite chambre à fluide (18) et K est une constante.

5. Procédé selon la revendication 4, caractérisé en ce que lesdits orifices ont des dimensions égales et sont disposés dans une configuration déterminée par la relation:

$$Sn = \frac{Smax}{2} \left( \frac{n}{N/2} \right)^2$$

pour Sn<Smax/2 et

$$Sn = Smax - \frac{Smax}{2} \left( \frac{N-n}{N/2} \right)^2$$

pour Sn>Smax/2

où Sn est la distance suivant ladite surface périphérique entre l'orifice à sa position minimale et l'orifice respectif, Smax est la distance entre ladite position minimale et ladite position maximale, n est le nombre des orifices entre l'orifice à la position minimale et l'orifice à la distance Sn de la position minimale plus 1, et N est le nombre total des orifices moins 1.

6. Procédé selon la revendication 4, caractérisé en ce que lesdits orifices sont disposés à écartement égaux entre ladite position minimale et ladite position maximale et ont des rayons déterminés par les relations:

$$Rn = rmin \left( \frac{N-n}{N/2} \right)^4$$

pour Sn<Smax/2 et

$$Rn = rmin \left( \frac{n}{N/2} \right)^4$$

pour Sn>Smax/2

où Sn est la distance suivant ladite surface périphérique entre l'orifice à la position minimale et l'orifice respectif, Smax est la distance entre ladite position minimale et ladite position maximale, Rn est le rayon d'un orifice à la position qui se trouve à une distance Sn de la position minimale, Rmin est le rayon d'un orifice à Smax/2, n est le nombre des orifices entre l'orifice à la position minimale et l'orifice à la position qui se trouve à une distance Sn de la position minimale plus 1 et N est le nombre total de l'orifice moins 1.

**Patentansprüche**

1. Radiusfühler zur Bestimmung des Außenradius einer Rolle eines auf eine Spule (10) gewickelten biegsamen Bandes (14), dadurch gekennzeichnet, daß ein Lager (16) benachbart zu der Spule (10) angeordnet ist und eine bogenförmige Umfangsoberfläche aufweist, um die im Betrieb ein Teil des Bandes (14) herumgelegt ist, daß Strömungsmittelzufuhreinrichtungen (24) zur Zuführung eines Strömungsmittels in einen Bereich zwischen dem Band (14) und der Umfangsfläche des Lagers (16) vorgesehen sind, daß das Strömungsmittel in dem Bereich einen derartigen Druck aufweist, daß eine Strömungsmittellagerung für das Band (14) gebildet wird, daß eine Vielzahl von Öffnungen (22) in Strömungsmittelverbindung zwischen einer Strömungsmittelkammer (18) und der Umfangsfläche des Lagers (16) steht, daß die Öffnungen (22) in einem Muster angeordnet sind, das sich entlang der Umfangsfläche des Lagers (16) zwischen Maximum- und Minimum-Positionen des letzten oder ersten Punktes der Abstützung des Bandes (14) durch die Strömungsmittellagerung erstreckt, wenn sich das Band in Richtung auf die oder von der Spule (10) bewegt, wobei für diese Positionen die Länge der Strömungsmittellagerung ein Maximum bzw. ein Minimum aufweist, daß die Öffnungen (22) so angeordnet und ausgebildet sind, daß (a) Strömungsmittel in die Strömungsmittelkammer (18) durch diejenigen Öffnungen eingeleitet wird, die in Verbindung mit dem Bereich stehen und Strömungsmittel aus der Strömungsmittelkammer (18) durch die Öffnungen ausgestossen wird, die nicht mit dem Bereich in Verbindung stehen, wenn der letzte oder erste Punkte der Abstützung zwischen den maximalen und minimalen Positionen liegt und daß (b) ein Strömungsmitteldruck in der Strömungsmittelkammer (18) erzeugt wird, der sich im wesentlichen linear zwischen einem minimalen Druck und einem maximalen Druck ändert, wenn sich der letzte oder erste Punkte der Abstützung zwischen seinen minimalen und maximalen Positionen ändert, daß Druckfühlereinrichtungen (20) in der Strömungsmittelkammer (18) zur Messung des Strömungsmitteldrucks in der Strömungsmittelkammer (18) vorgesehen sind, so daß der Außenradius der Rolle aus flexiblem Band (14), das auf die Spule (10) aufgewickelt ist, aus dem Strömungsmitteldruck in der Strömungsmittelkammer (18) aus der Beziehung

$$Rr = X \cos (KP) + Y \sin (KP) - Rb$$

bestimmt werden kann, worin Rr der zu bestimmende Radius, X und Y die horizontalen bzw. vertikalen Komponenten der Entfernung zwischen der Achse der Spule (10) und der Achse des Lagers (16), Rb der Radius der bogenförmigen Umfangsfläche des Lagers (16), P der Druck in der Strömungsmittelkammer (18) un K eine Konstante ist.

2. Radiusfühler nach Anspruch 1, dadurch gekennzeichnet, daß die Öffnungen eine gleiche Größe aufweisen und in einem Muster angeordnet sind, das durch die Beziehung

$$Sn = \frac{Smax}{2} \left( \frac{n}{-N/2} \right)^2$$

für Sn≤Smax/2, und

$$Sn = Smax - \frac{Smax}{2} \left( \frac{N-n}{N/2} \right)^2$$

für Sn≥Smax/2 bestimmt ist, worin Sn die Strekke entlang der Umfangsoberfläche zwischen der Öffnung an der Minimumposition und der jeweiligen Öffnung, Smax die Strecke zwischen den minimalen und maximalen Positionen, n die Anzahl der Öffnungen zwischen der Öffnung an der Minimum-Position und der Öffnung an der Strecke Sn von der Minimum-Position plus 1 und N die Gesamtzahl der Öffnungen weniger 1 ist.

3. Radiusfühler nach Anspruch 1, dadurch gekennzeichnet, daß die Öffnungen mit gleichförmigem Abstand zwischen den Minimum- und Maximum-Positionen angeordnet sind und Radien aufweisen, die durch die Beziehungen

$$Rn = rmin \left( \frac{N-n}{N/2} \right)^4$$

für Sn≤Smax/2, und

$$Rn = rmin \left( \frac{n}{N/2} \right)^4$$

für Sn≥Smax/2 bestimmt sind, worin Sn die Strekke entlang der Umfangsoberfläche zwischen der Öffnung an der Minimum-Position und der jeweiligen Öffnung, Smax die Strecke zwischen den Minimum- und Maximum-Positionen, Rn der Radius einer Öffnung an einer Position, die sich in einer Entfernung Sn von der Minimum-Position befindet, rmin der Radius einer Öffnung bei Smax/2, n die Anzahl der Öffnungen zwischen der Öffnung an der Minimum-Position und der Öffnung an der Position, die sich in der Entfernung Sn von der Minimum-Position plus 1 befindet, und N die Gesamtzahl der Öffnungen weniger 1 ist.

4. Verfahren zur Bestimmung des Außenradius einer Rolle eines auf eine Spule (10) gewickelten biegsamen Bandes, dadurch gekennzeichnet, daß ein Teil des Bandes (14) um die bogenförmige Umfangsfläche eines Lagers (16) herumgelegt wird, das benachbart zu der Spule (10) angeordnet ist, daß eine Strömungsmittelquelle (24) für unter Druck stehendes Strömungsmittel zur Lagerung des Bandes (15) um die Umfangsfläche des Lagers (16) herum vorgesehen wird, daß in dem Lager (16) eine Strömungsmittelkammer (18) und eine Vielzahl von Öffnungen (22) vorgesehen wird, die in Strömungsmittelverbindung zwischen der Strömungsmittelkammer (18) und der Umfangsfläche des Lagers (16) stehen, daß sich das Muster der Öffnungen (22) entlang der Umfangsfläche des Lagers (16) zwischen Maximum- und Minimum-Positionen des letzten oder ersten Punktes der Abstützung des Bandes (14) durch die Strömungsmittellagerung erstreckt, wenn sich dieses in Richtung auf die bzw. von der Spule (10) bewegt, wobei für diese Positionen die Länge der Strömungsmittellagerung ein Maximum bzw. Minimum ist, daß die Öffnungen (22) so angeordnet sind, daß Strömungsmittel in die Strömungsmittelkammer durch diejenigen Öffnungen eingeleitet wird, die mit dem Teil der Umfangsfläche des Lagers (16) in Verbindung stehen, der das Band (14) lagert, und daß Strömungsmittel aus der Strömungsmittelkammer (18) durch diejenigen Öffnungen ausgestossen wird, die nicht mit dem das Band (14) lagernden Teil der Umfangsfläche des Lagers (16) in Verbindung stehen, wenn der letzte oder erste Punkte der Abstützung zwischen den Maximum- und Minimum-Positionen liegt, daß die Öffnungen (22) derart angeordnet werden, daß der Strömungsmitteldruck in der Strömungsmittelkammer (18) sich im wesentlichen linear zwischen einem minimalen Druck und einem maximalen Druck ändert, wenn sich der letzte oder erste Punkt der Abstützung zwischen den Minimum- und Maximum-Positionen ändert, daß der Druck in der Strömungsmittelkammer (18) gemessen wird und daß der Außenradius der Rolle von auf die Spule (10) gewickeltem Band aus der Beziehung

$$Rr = X \cos (KP) + Y \sin (KP) - Rb$$

bestimmt wird, worin Rr der zu bestimmende Radius, X und Y die horizontalen bzw. vertikalen Komponenten der Entfernung zwischen der Achse der Spule (10) und der Achse des Lagers (16), Rb der Radius der bogenförmigen Umfangsfläche des Lagers (16), P der Druck in der Strömungsmittelkammer (18) und K eine Konstante ist.

5. Verfahren nach Anspruch 4, dadurch gekennzeichnet, daß die Öffnungen die gleiche Größe aufweisen und in einem Muster angeordnet sind, das durch die Beziehung

$$Sn = \frac{Smax}{2} \left( \frac{n}{N/2} \right)^2$$

für $Sn \leq Smax/2$, und

$$Sn = Smax - \frac{Smax}{2} \left( \frac{N-n}{N/2} \right)^2$$

für $Sn \geq Smax/2$ bestimmt ist, worin Sn die Strecke entlang der Umfangsfläche zwischen der Öffnung an der Minimum-Position und der jeweiligen Öffnung, Smax die Strecke zwischen den Minimum- und Maximum-Positionen, n die Anzahl der Öffnungen zwischen der Öffnung an der Minimum-Position und der Öffnung in der Entfernung Sn von der Minimum-Position plus 1, und N die Gesamtzahl der Öffnungen weniger 1 ist.

6. Verfahren nach Anspruch 4, dadurch gekennzeichnet, daß die Öffnungen mit gleichem Abstand zwischen den Minimum- und Maximum-Positionen angeordnet sind und Radien aufweisen, die durch die Beziehungen

$$Rn = rmin \left( \frac{N-n}{N/2} \right)^4$$

für $Sn \leq Smax/2$, und

$$Rn = rmin \left( \frac{n}{N/2} \right)^4$$

für $Sn \geq Smax/2$ bestimmt sind, worin Sn die Strekke entlang der Umfangsfläche zwischen der Öffnung an der Minimum-Position und der jeweiligen Öffnung, Smax die Strecke zwischen den Minimum- und Maximum-Positionen, Rn der Radius einer Öffnung an einer Position, die sich in einer Entfernung Sn von der Minimum-Position befindet, rmin der Radius einer Öffnung bei Smax/2, n die Anzahl der Öffnungen zwischen der Öffnung an der Minimum-Position und der Öffnung an der Position, die sich in einer Entfernung Sn von der Minimum-Position plus 1 befindet, und N die Gesamtzahl der Öffnungen weniger 1 ist.

Fig.1

FIG 2

FIG. 3